# FASCICULE DE BREVET EUROPEEN

(11) **EP 4 308 861 B1**
(45) Date de publication et mention de la délivrance du brevet: **07.05.2025**
(21) Numéro de dépôt: 22716014.0
(22) Date de dépôt: 16.03.2022
(51) Int. Cl.: F24T 10/13, F24T 50/00, F28D 20/00, F24T 10/00

(54) **PROCÉDÉ POUR PILOTER UNE INSTALLATION RELIÉE À UNE SOURCE GÉOTHERMIQUE POUR FOURNIR DE L'ÉNERGIE THERMIQUE DANS AU MOINS UN BÂTIMENT, INSTALLATION ET SYSTÈME DE RÉGULATION S'Y RAPPORTANT**
VERFAHREN ZUR STEUERUNG EINER AN EINE GEOTHERMISCHE QUELLE ANGESCHLOSSENEN ANLAGE ZUR VERSORGUNG MINDESTENS EINES GEBÄUDES SOWIE REGELSYSTEM UND ANLAGE HIERZU
METHOD FOR CONTROLLING AN INSTALLATION CONNECTED TO A GEOTHERMAL SOURCE FOR SUPPLYING THERMAL ENERGY TO AT LEAST ONE BUILDING, AND REGULATING SYSTEM AND INSTALLATION RELATING THERETO

(30) Priorité: 19.03.2021 FR 2102800
(43) Date de publication de la demande: 24.01.2024
(73) Titulaire: Accenta, 92100 Boulogne Billancourt (FR)
(72) Inventeur: TREMOLIÈRES, Pierre, 91400 Orsay (FR); BRUAND, Philippe, 78110 Le Vesinet (FR)
(74) Mandataire: IPAZ
(86) Numéro de dépôt international: PCT/EP2022/056861
(87) Numéro de publication internationale: WO 2022/194951

(56) Documents cités:
- EP-A1- 3 770 514
- US-A1- 2016 195 288
- US-A1- 2020 049 381

## Description

La présente invention concerne un procédé pour piloter une installation reliée à une source géothermique pour fournir de l'énergie thermique dans au moins un bâtiment.

La présente invention concerne également une installation dans laquelle est mise en œuvre ce procédé.

La présente invention concerne encore un système de régulation mettant en œuvre le procédé et/ou intégré à l'installation.

L'invention intéresse tout particulièrement mais non limitativement les ensembles immobiliers relativement grands, par exemple les immeubles collectifs, groupes d'immeubles, ensembles industriels, les centres hospitaliers, les centres commerciaux, les hôtels ou complexes de type hôtelier, les ensembles scolaires ou universitaires etc.

### ETAT DE LA TECHNIQUE

Dans le domaine du bâtiment on connaît les installations permettant d'approvisionner l'énergie en provenance de plusieurs sources, par exemple réseaux publics de distribution de gaz ou d'électricité, sondes géothermiques, capteurs solaires thermiques, capteurs solaires photovoltaïques, capteurs aérothermiques ou etc. Ces installations connues comportent divers équipements pour transformer l'énergie collectée et pour l'utiliser, par exemple des pompes à chaleur, des appareils de chauffage par effet Joule, des climatiseurs, des chaudières etc. Il est également connu de mettre en œuvre un procédé qui régule l'installation en pondérant le recours aux différentes sources et aux différents équipements en fonction des besoins et selon des critères économiques ou autres.

Les documents EP 3 770 514 A1, FR 2 960 099 A1, US 2008/092 875 A1, WO 2015/014 951 A2, EP 3 012 539 A1, EP 2 141 419 A1, FR 3 065 516 A1, EP 1 987 298 B1, DE 10 2010 033 909 A1, DE 100 22 544 A1, US 2018/0 283 799 A1, KR 2013 00 17 182 A et KR 101 801 775 B1 décrivent des installations de ce type, perfectionnées de diverses manières dans le sens d'une exploitation optimisée des ressources les plus avantageuses en termes de coût et/ou d'environnement.

De telles installations rencontrent en pratique des difficultés qui peuvent être chroniques ou ponctuelles. Le risque de dérive en température du milieu géothermique dans lequel sont implantées les sondes est une difficulté essentiellement chronique. Par exemple en contrée tempérée ou froide le milieu géothermique excessivement sollicité se refroidit de plus en plus au fil des ans, au point de devenir inexploitable, la régénération naturelle du sol n'étant pas suffisante pour renouveler les calories prélevées. A l'inverse, en contrée chaude, le milieu géothermique incapable d'évacuer les calories apportées par la climatisation devient progressivement trop chaud pour être exploitable. Dans un cas comme dans l'autre, de coûteuses installations géothermiques tombent dans l'abandon après quelques années, ou alors il faudrait les surdimensionner au point de les rendre non viables sur le plan économique. Même si de tels extrêmes sont évités, l'installation équipée d'une géothermie ayant dérivé en température devient globalement moins efficace puisque la géothermie, censée être l'une des sources les plus avantageuses, ne l'est plus autant que prévu à la conception. En cas d'utilisation précautionneuse de la ressource géothermique pour éviter ces risques, la ressource risque d'être sous-exploitée, ce qui est grave s'agissant d'une installation représentant un investissement élevé destiné à donner accès à une forme d'énergie avantageuse à la fois sur le plan économique et sur le plan environnemental.

Le but de la présente invention est ainsi de remédier au moins en partie à ces inconvénients en proposant un procédé et/ou une installation et/ou un système de régulation capable(s) d'optimiser durablement la fourniture d'énergie géothermique dans au moins un bâtiment ou analogue.

### Exposé de l'invention

Suivant un premier aspect de l'invention, le procédé pour piloter une installation associée à une structure consommatrice d'énergie, cette installation comprenant au moins une source d'énergie géothermique avec laquelle on pratique du stockage thermique, au moins une autre source d'énergie, des équipements de transformation et de distribution d'énergie dans la structure, et un système de régulation, la source géothermique comprenant des sondes d'échange thermique installées dans un milieu géothermique et adaptées à permettre un échange de chaleur entre le milieu géothermique et un fluide caloporteur parcourant les sondes, le procédé comprenant :
- la définition d'une trajectoire prévisionnelle de la température du milieu géothermique dans le temps ;
- l'évaluation d'au moins sensiblement en temps réel la température du milieu géothermique et/ou la puissance thermique échangée avec le milieu géothermique ;
- l'opération d'un ajustement de la puissance thermique échangée entre le fluide caloporteur et le milieu géothermique dans le sens d'une conformité au moins approximative de la température du milieu géothermique avec la trajectoire prévisionnelle, dans lequel la trajectoire prévisionnelle présente en moyenne annuelle un différentiel de température avec la température du sol naturel, caractérisé en ce que, dans le cas d'une installation où la géothermie fournit en moyenne annuelle, à la structure, plus de puissance de chauffage que de puissance de froid, la trajectoire prévisionnelle est choisie pour être, en moyenne annuelle, inférieure à la température du sol naturel ; et en ce que, dans le cas d'une installation où la géothermie fournit en moyenne annuelle, à la structure, plus de puissance de froid que de puissance de chauffage, la trajectoire prévisionnelle est choisie pour être, en moyenne annuelle, supérieure à la température du sol naturel.

L'invention rationalise l'exploitation du milieu géothermique comme source naturelle d'énergie thermique et comme réservoir thermique. Elle permet à la fois de réduire l'investissement initial pour une performance énergétique donnée, d'améliorer l'efficacité du champ de sondes en tant que source et du milieu géothermique en tant que réservoir, et de pérenniser les performances initiales du champ de sondes.

Au sens de l'invention, « thermique » est un adjectif générique désignant indifféremment « calorifique » (ou « à effet de réchauffement »), et « frigorifique » (ou « à effet de refroidissement »). Le fluide « caloporteur » véhicule de l'énergie « thermique », donc une énergie qui peut avoir un effet aussi bien calorifique que frigorifique, puisque par nature le fluide qui véhicule des calories tend à refroidir un milieu et à en réchauffer un autre.

On appelle « milieu géothermique » une portion de sol couvrant une certaine surface et s'étendant sur une certaine profondeur (par exemple 100 mètres ou plus), dans laquelle on a placé des capteurs d'énergie thermique appelés sondes, placés dans des forages. Les sondes sont parcourues par le fluide caloporteur, lequel véhicule l'énergie thermique entre le milieu géothermique et l'installation. On appelle ici « sol naturel » le sol qui environne le milieu géothermique sans être significativement influencé par sa température. Bien entendu, la limite entre le milieu géothermique et le sol naturel est théorique, concrètement il y a une zone de transition entre les deux.

La capacité calorifique d'un milieu géothermique est considérable. Ceci signifie qu'une variation de température de quelques dixièmes de degrés dans le milieu géothermique correspond à de grandes quantités d'énergie thermique. Ainsi non seulement de grandes quantités d'énergie thermique peuvent être extraites du milieu géothermique, mais encore d'aussi grandes quantités d'énergie thermique peuvent également y être injectées à des fins de stockage. On peut par exemple stocker de la chaleur l'été que l'on utilisera l'hiver suivant à des fins de chauffage, et stocker du froid l'hiver que l'on utilisera l'été suivant à des fins de rafraichissement/climatisation. Les sondes ainsi utilisées sont souvent appelées sondes BTES (Boral Thermal Energy Storage = Stockage d'Energie Thermique en Forage).

Avant la mise en route de l'installation, on définit pour le milieu géothermique, selon l'invention, une trajectoire de température qui correspond typiquement à un compromis jugé optimal entre divers critères, qui peuvent notamment comprendre : coût d'investissement, coût d'exploitation, aspects environnementaux, surface au sol disponible, caractéristiques du sol. Certains de ces critères font intervenir des paramètres relatifs à d'autres équipements de l'installation. Par exemple le coût d'investissement à prendre en compte est en fait un différentiel de coût avec d'autres options pour la captation, la production et/ou le stockage d'énergie.

Avec l'invention, la température du milieu géothermique n'est plus une conséquence erratique des processus de captation et de stockage d'énergie, mais une donnée maîtrisée de cette exploitation. Ainsi, par exemple, avec l'invention on peut très bien stocker de la chaleur dans un milieu géothermique plus froid que le sol naturel ou stocker du froid dans un milieu géothermique plus chaud que le sol naturel. Ceci est même avantageux comme on le verra plus loin.

L'invention prévoit d'ajuster la puissance thermique échangée avec le milieu géothermique. Par « échangée » on entend couvrir « apportée en stockage » dans le milieu géothermique, et/ou « prélevée » dans le milieu géothermique. La puissance est ajustée pour que la température du milieu géothermique réelle soit aussi conforme que possible, à chaque instant, à la trajectoire prévisionnelle.

Dans une installation mettant en œuvre l'invention, cette recherche de conformité n'est pas nécessairement permanente. Elle peut ne concerner que certaines phases de fonctionnement de l'installation. Dans une installation typique, ces phases peuvent être qualifiées de « ordinaires ». On verra plus loin en effet l'intérêt qu'il peut y avoir à s'écarter de la trajectoire prévisionnelle dans certaines circonstances, mais sans perdre la maîtrise de la trajectoire réelle.

La trajectoire prévisionnelle peut dans un exemple simple correspondre à une valeur uniforme, ou sensiblement uniforme de la température. C'est par exemple le cas si des phases de stockage et de déstockage d'énergie thermique se succèdent suffisamment rapidement pour que la température du milieu géothermique reste sensiblement constante. Il peut par exemple y avoir stockage le jour et déstockage la nuit ou inversement.

D'autres exemples, mais à trajectoire de température non-uniforme, sont présentés plus loin.

Dans une version simple dans son principe, pour ajuster la puissance échangée de façon que la trajectoire de la température réelle du milieu géothermique coïncide avec la trajectoire prévisionnelle, on mesure la température du milieu géothermique et on adapte la puissance thermique échangée pour en permanence ramener la température réelle aussi près que possible de la température prescrite par la trajectoire. En pratique, cette technique n'est pas la plus efficace dans sa mise en œuvre. La température du milieu géothermique est difficile à mesurer avec précision et n'évolue que très lentement. Si l'on attend de constater une erreur sur cette température, l'énergie à mettre en jeu pour corriger l'erreur peut être considérable.

C'est pourquoi, selon l'invention, on préfère prédéfinir la puissance que le fluide caloporteur doit échanger avec le milieu géothermique en fonction du temps, autrement dit définir un chronogramme prévisionnel de puissance thermique échangée, et mesurer de façon sensiblement permanente la puissance réellement échangée et au besoin la corriger dans l'immédiat ou à court terme pour retrouver la conformité avec le chronogramme en termes d'énergie échangée. La surveillance de la température du milieu géothermique sert alors non plus à réguler en temps de réponse bref la puissance échangée, mais à contrôler à long terme la validité du modèle sur la base duquel on a établi le chronogramme, et au besoin corriger ce modèle et avec lui le chronogramme, voire la trajectoire elle-même, ou encore à détecter s'il y a lieu de compenser l'effet cumulatif des écarts temporaires entre la température réelle du milieu géothermique et la trajectoire prévisionnelle.

Selon l'invention, l'installation comprend, en plus de la source géothermique, au moins une autre source. Typiquement, la mise en œuvre de la trajectoire prévisionnelle s'inscrit dans une gestion globale de l'installation. Dans le cadre de cette gestion globale, la bonne gestion de la source géothermique jouit d'un rang de priorité élevé. Une première raison à cela est que l'énergie géothermique est très avantageuse économiquement. Une deuxième raison à cela est la nécessité, selon l'invention, de préserver la stabilité thermométrique de la source géothermique. Cette priorisation de la gestion de la ressource géothermique sur la base de critères dont certains sont étrangers au niveau de la demande et à la nature de la demande, est permise par la possibilité de mettre en œuvre l'au moins une autre source pour faire l'appoint de puissance par rapport à la demande.

Selon l'invention, la trajectoire présente en moyenne annuelle un différentiel de température avec la température du sol naturel. On crée ainsi les conditions pour établir un flux thermique entre le milieu géothermique et le sol naturel. En particulier, de préférence, la trajectoire présente pour toute la durée pour laquelle elle est établie une différence dans un même sens avec la température du sol naturel. Toujours selon l'invention, dans le cas d'une installation où la géothermie fournit en moyenne annuelle, à la structure, plus de puissance de chauffage que de puissance de froid, la trajectoire est choisie pour être, en moyenne annuelle, inférieure à la température du sol naturel.

Ce choix est surprenant pour une installation opérant du stockage thermique, dans laquelle le préjugé serait de constituer une réserve de chaleur en surchauffant autant que possible le milieu géothermique par rapport au sol naturel. L'invention va à l'encontre de ce préjugé : le milieu géothermique plus froid que le sol naturel engendre un flux de chaleur du sol naturel vers le milieu géothermique. Ainsi, les calories fournies par l'installation en vue du stockage sont abondées par celles provenant du sol naturel. On obtient donc des calories « gratuites » et en même temps le même effet de volant thermique que si le champ de sondes était plus grand. Et contrairement là encore à ce qu'on pourrait penser, la température plus basse dans le milieu géothermique ne préjudicie que très marginalement le rendement des équipements de l'installation qui utilisent la chaleur stockée. En effet, le liquide caloporteur arrivant aux sondes pour prélever de la chaleur dans le milieu géothermique est de toute façon à une température bien plus basse que le milieu géothermique. Si par exemple ces équipements sont des pompes à chaleur, leur coefficient de performance sera dicté par les deux températures extrêmes du fluide caloporteur, et très peu par la température, intermédiaire, du milieu géothermique. Le différentiel de température entre le milieu géothermique et le sol naturel peut être de quelques °C, par exemple de l'ordre de 2 à 4°C.

Selon l'invention, où la géothermie fournit en moyenne annuelle, à la structure, plus de puissance de froid que de puissance de chauffage, la trajectoire est choisie pour être, en moyenne annuelle, supérieure à la température du sol naturel. Avec cette version de l'invention, des frigories « gratuites » sont extraites du sol naturel par le milieu géothermique, avec des avantages économiques (réduction de la taille du champ de sondes, abondement du stockage thermique) semblables à ceux évoqués ci-dessus pour le stockage de chaleur à température plus basse que le sol naturel. Là encore, le différentiel de température entre le milieu géothermique et le sol naturel peut être de quelques °C, par exemple de l'ordre de 2 à 4°C.

Dans une version typique préférée, en régime stabilisé au-delà d'une période transitoire, la trajectoire prévisionnelle est fluctuante dans le temps, de part et d'autre d'une valeur moyenne sensiblement stable. Cette version est particulièrement avantageuse dans le cas fréquent d'une installation où la géothermie fournit de la chaleur en hiver et du froid en été. Ainsi l'extraction de chaleur en hiver correspond à du stockage de froid pour l'été suivant, et inversement l'extraction de froid en été correspond à du stockage de chaleur pour l'hiver suivant. Dans un tel cas, la température du milieu géothermique diminue pendant une partie de l'année où on extrait de la chaleur et remonte pendant une autre partie de l'année où on extrait du froid. D'une manière générale, la géothermie est presque toujours la source d'énergie thermique la plus avantageuse. Il y a donc un intérêt à l'exploiter dès que c'est possible, aussi bien en extraction qu'en stockage, sans toutefois, selon l'invention, faire dériver la température du milieu géothermique. D'un autre côté, il est rare que le besoin de chaleur et le besoin de froid soient égaux. Dans certaines installations, notamment certaines installations en régions tempérées, le besoin de chaleur en saison froide ou fraiche est plus grand que le besoin de rafraichissement en saison chaude. On peut alors, selon l'invention, extraire le maximum possible de froid, et n'extraire que la quantité correspondante de chaleur pour respecter la stabilité de trajectoire. En ayant donné à la trajectoire une température moyenne inférieure à la température du sol naturel, on va cependant pouvoir extraire plus de chaud que de froid, conformément au besoin de cet exemple, tout en garantissant la stabilité thermique du milieu géothermique.

D'une manière générale, dans un mode de mise en œuvre du procédé, la trajectoire est définie pour des instants successifs dans le sens d'une optimisation globale pour chaque instant considéré et son futur, de manière à préserver la stabilité thermique du milieu géothermique. Autrement dit, selon l'invention, on évite par exemple d'extraire pendant l'hiver des quantités de chaleur si grandes que le stockage de l'été suivant risque d'être insuffisant pour assurer la stabilité thermique du milieu géothermique. A cet effet, dans certaines versions préférées du procédé, l'invention propose de prédire les besoins thermiques du bâtiment sur une saison entière (1 an)

Dans une version de l'invention, la puissance de l'installation hors géothermie est suffisante pour satisfaire les besoins des utilisateurs. Cependant, la géothermie est presque toujours la source la plus avantageuse. Son utilisation est prioritaire par rapport aux autres sources. L'invention peut alors consister à piloter la puissance fournie par la géothermie de façon que la trajectoire de température du milieu géothermique soit respectée. Un automatisme gère le reste de l'installation de façon à satisfaire la demande à partir de l'au moins une autre source. Cette version est avantageuse par sa relative simplicité de régulation et son aptitude au respect rigoureux de la trajectoire de température prévue pour le milieu géothermique.

Cependant, cette version nécessite de surdimensionner la puissance de l'installation et elle n'optimise pas le recours à la ressource géothermique. Pour une même puissance moyenne annuelle fournie par la géothermie, il y a un intérêt à surpondérer la géothermie dans les périodes où les autres sources sont particulièrement désavantageuses en termes de coût, d'environnement etc. En outre, la possibilité de surpondérer la géothermie en période de forte demande de puissance permet de réduire la puissance installée des autres sources. C'est pourquoi, comme déjà évoqué plus haut, le procédé selon l'invention peut avantageusement, à un instant d'intervention, autoriser la température du milieu géothermique à s'écarter de la trajectoire prévisionnelle pour le temps suivant l'intervention.

Ainsi, à certains instants postérieurs à la mise en route de l'installation, le procédé peut commander ou autoriser une excursion par rapport à la trajectoire prévisionnelle dans des cas où des valeurs d'au moins un paramètre choisi dans la liste comprenant les paramètres relatifs à l'installation, à son site d'implantation, à son utilisation prévue, à ses équipements en matière d'énergie thermique, s'écartent de leur estimation prise en compte pour définir la trajectoire prévisionnelle en vigueur jusqu'au moment de l'intervention.

Dans l'exemple précité d'une installation devant fournir plus de chaleur que de froid, on peut par exemple extraire plus de froid que prévu d'après la trajectoire prévisionnelle en cas d'été particulièrement chaud ou plus généralement de demande réelle supérieure à celle qui avait été prévue lors de l'établissement de la trajectoire prévisionnelle. Ainsi, à la fois on règle de façon avantageuse le surcroît de besoin de froid et on se donne les moyens d'un surcroît d'extraction de chaleur pendant la saison froide, en remplacement au moins partiel d'une autre source de chaleur, moins avantageuse, de l'installation.

Dans d'autres cas les valeurs qui s'écartent de leur estimation peuvent être ou comprendre des valeurs prévisionnelles portant sur des instants postérieurs à l'instant d'intervention. Par exemple, on peut réduire la puissance échangée avec la source géothermique à un instant d'intervention, même si cela correspond à cet instant à une dégradation de l'efficacité, ceci dans la perspective d'une altération future d'un paramètre pris en compte pour la définition de la trajectoire prévisionnelle. Cette altération peut par exemple être la conséquence attendue d'un phénomène météorologique exceptionnel annoncé. On peut au contraire, dans certains cas d'évènement annoncé, intensifier le recours à la géothermie. Par exemple, dans la perspective d'une période caniculaire, on peut décider de constituer par avance une réserve de froid en congelant le contenu d'une citerne d'accumulation de froid grâce à une pompe à chaleur extrayant du froid dans le milieu géothermique pour l'injecter dans la citerne.

Dans certaines situations, de l'énergie gratuite ou à très bas coût est disponible, par exemple si des capteurs photovoltaïques de l'installation produisent plus d'électricité que demandé par les équipements utilisateurs. L'électricité surabondante peut alimenter une pompe à chaleur injectant de l'énergie thermique dans le milieu géothermique, sous forme de calories ou de frigories en fonction du sens d'un écart courant entre la température réelle du milieu géothermique et la trajectoire prévisionnelle, ou encore, au contraire, pour former ou accroître un tel écart dans un sens favorable en fonction de la saison en cours ou en prévision de la prochaine saison, ou bien encore pour contribuer à une correction d'une dérive de la température moyenne du milieu géothermique.

Plusieurs versions du procédé permettent à la trajectoire de température réelle du milieu géothermique de s'écarter de la trajectoire prévisionnelle notamment dans les circonstances qui viennent d'être décrites.

Dans une première version, le procédé comprend de préférence :
- initier un épisode d'excursion au cours duquel la trajectoire s'écarte temporairement de la trajectoire prévisionnelle pour tenir compte de situations exceptionnelles concernant l'un au moins des paramètres, choisis dans la liste comprenant les paramètres relatifs à l'installation, à son site d'implantation, à son utilisation prévue, à ses équipements en matière d'énergie thermique, ou une combinaison de plusieurs des paramètres,
- définir au début de l'épisode la puissance thermique échangée dans l'au moins une sonde de façon que la température du milieu géothermique s'écarte de la trajectoire prévisionnelle, et
- définir pour la température du milieu géothermique une trajectoire d'excursion temporairement écartée de la trajectoire prévisionnelle.

Dans cette version de l'invention, à un instant d'intervention où on décide de faire dévier la température du milieu géothermique par rapport à la trajectoire prévisionnelle, on établit une trajectoire d'excursion qui permettra de conserver la maîtrise de la température du milieu géothermique même pendant le temps où celle-ci aura dévié de la trajectoire provisionnelle.

De préférence, la trajectoire d'excursion comporte une phase divergente au long de laquelle la trajectoire d'excursion diverge de la trajectoire prévisionnelle, et une phase de rattrapage qui raccorde la phase divergente à la trajectoire prévisionnelle.

Dans une deuxième version, le procédé permettant à la température réelle du milieu géothermique de s'écarter de la trajectoire prévisionnelle sans perdre la maîtrise de la stabilité thermique du milieu géothermique à moyen-long terme, comprend :
- piloter la puissance thermique échangée en fonction de paramètres comprenant la demande réelle, avec un degré de liberté à l'égard de la trajectoire prévisionnelle ; et de préférence, à cette fin:
- se munir d'un chronogramme prévisionnel de la puissance thermique échangée avec le milieu géothermique ;
- surveiller la conformité au moins approximative de la température moyenne évaluée du milieu géothermique avec une moyenne de la trajectoire prévisionnelle ;
- en cas de dérive de la température évaluée moyenne, modifier au moins indirectement la puissance thermique échangée avec le milieu géothermique, par rapport au chronogramme prévisionnel, dans un sens tendant au retour à la conformité avec l'une de la température moyenne et de la trajectoire prévisionnelle.

Comme exemple pour la mise en place du degré de liberté précité, ladite logique pilote les équipements en pourcentage de puissance totale, de sorte qu'en cas de puissance totale différente la puissance de chaque équipement est modifiée de façon proportionnelle. Dans un tel cas l'excursion de la température réelle du milieu géothermique par rapport à la trajectoire prévisionnelle est subie. Une mesure de correction de la trajectoire réelle n'est pas toujours nécessaire : l'inertie du milieu géothermique est tellement grande qu'une excursion individuelle n'a pas de conséquences immédiates et les excursions peuvent statistiquement se compenser à moyen terme. On peut ainsi se contenter de surveiller le respect de la température moyenne du milieu géothermique à long terme et en cas de dérive modifier les paramètres de ladite logique. Dans l'exemple précédent cela reviendrait à modifier provisoirement certains au moins desdits pourcentages. Mais il est également possible après une excursion, notamment si elle dépasse un certain seuil, de prendre des mesures correctives immédiates visant à ce que la température du milieu géothermique rejoigne aussi vite que possible la trajectoire prévisionnelle.

Cette seconde version du procédé a l'avantage d'être simple et souple. Elle combine dans un même processus de régulation les écarts permis par le degré de liberté et les écarts initiés délibérément en fonction de prévisions à court terme, ou d'opportunités d'injecter de l'énergie thermique peu coûteuse dans le milieu géothermique, ou encore pour corriger la température moyenne du milieu géothermique.

Indépendamment des épisodes d'excursion, le procédé peut comporter un processus de modification définitive de la trajectoire prévisionnelle, le procédé comprenant alors, de préférence :
- mettre à jour au moins une des estimations d'après une tendance longue constatée ou anticipée pour l'un au moins des paramètres, différente de l'estimation précédente prise en compte pour la définition de la trajectoire prévisionnelle en vigueur ;
- remplacer définitivement la trajectoire prévisionnelle par une nouvelle trajectoire prévisionnelle prenant en compte l'au moins une estimation mise à jour.

L'estimation qui est mise à jour peut être consécutive à une constatation que la réalité a démenti l'estimation précédente, ou encore à une évolution de certains paramètres au cours du temps. Par exemple la destination d'un bâtiment peut avoir changé, de nouveaux équipements peuvent y avoir été installés, un équipement peut être en dérangement etc.

Dans une version avantageuse, en fonction de paramètres relatifs au climat, aux sources et aux besoins énergétiques de l'installation, le système de régulation commande une activation sélective des sources et des équipements de l'installation, ainsi que des raccordements sélectifs entre sources et équipements, et opère un réglage de puissance des équipements, dans le sens d'une satisfaction des besoins et d'une optimisation au regard d'au moins un critère, ledit réglage de puissance comprenant ledit ajustement de la puissance thermique échangée entre le fluide caloporteur et le milieu géothermique dans l'au moins une sonde. L'au moins un critère peut être économique, environnemental, relatif au confort, à la maintenance etc.

Dans une version particulièrement préférée, le système de régulation définit une succession dans le temps de combinaisons d'états d'activation de certains au moins des équipements et des sources sur une durée postérieure à l'instant courant, dans un sens d'une optimisation incluant le temps à venir, au regard de l'au moins un critère.

De façon encore plus privilégiée, le procédé comprend la prise en compte de prévisions pour au moins un paramètre choisi parmi : au moins un prix de l'énergie en provenance d'une source, et au moins un paramètre climatique parmi la température extérieure, l'ensoleillement et la vitesse du vent.

Les concepteurs d'un ensemble immobilier établissent usuellement ce qu'on appelle en France une STD (Simulation Thermique Dynamique) du bâtiment, qui est un prévisionnel des besoins du bâtiment en énergie thermique sous ses différentes formes (chauffage, rafraichissement/climatisation, eau chaude sanitaire etc.), de façon très détaillée dans le temps, en fonction d'une météorologie moyenne pour la région, de l'exposition du bâtiment au soleil au vent ou autre, de l'utilisation prévue etc. A partir de là, selon l'invention on se munit d'un catalogue d'équipements et on explore systématiquement toutes les combinaisons possibles qui répondent à cette demande avec un coefficient de sécurité suffisant, on fait le bilan de chacune d'elles au regard de certains critères qui peuvent comprendre le coût d'investissement, le coût d'exploitation annuel, l'impact environnemental etc. Dans ce cadre, chacune de ces combinaisons fait l'objet d'une trajectoire prévisionnelle pour la température du milieu géothermique. Pour une même combinaison d'équipements plusieurs trajectoires peuvent être testées. La combinaison présentant le bilan considéré comme le meilleur est retenue, avec sa trajectoire prévisionnelle considérée comme la meilleure. La configuration choisie fait l'objet d'un scénario prévoyant à fréquence relativement élevée, typiquement quart d'heure par quart d'heure, les états d'activation et de raccordement des différents équipements de la combinaison sur une année entière. La trajectoire prévisionnelle et l'ajustement de la puissance échangée avec le milieu géothermique font partie de ce scénario. En service le scénario est mis en œuvre en étant toujours renouvelé pour l'année glissante à venir. De préférence, le scénario est un ensemble de préconisations fournies par une unité de commande à un automate qui gère la satisfaction des besoins réels en activant les équipements avec des rangs de priorité qui sont fonction de ces préconisations. Il faut en effet éviter que des préconisations trop strictes empêchent la satisfaction de besoins que les équipements de l'installation auraient pu satisfaire. On établit ainsi, entre l'unité de commande qui pilote le procédé dans le sens du respect de la trajectoire prévisionnelle, et l'automate qui pilote les états d'activation des équipements dans l'installation, le degré de liberté discuté plus haut à propos de certains épisodes d'excursion de la température réelle du milieu géothermique par rapport à la trajectoire prévisionnelle. Ce degré de liberté n'exclut pas que l'unité de commande initie elle-même des excursions, notamment pour anticiper des évènements futurs (canicule, grand froid, etc.) ou exploiter des opportunités d'injecter de l'énergie thermique peu coûteuse dans le milieu géothermique, ou encore pour corriger une dérive de la température moyenne du milieu géothermique.

Dans une version préférée, avant la mise en service de l'installation, on procède à des tests de réponse thermique du milieu géothermique à des échanges thermiques au moyen d'une sonde test, de façon à déterminer la conductivité thermique et la capacité calorifique du milieu géothermique. Ces tests permettent de prévoir l'évolution thermométrique du milieu géothermique en fonction de la puissance thermique échangée avec lui.

De façon avantageuse, en service, on mesure la température du fluide caloporteur à l'entrée et à la sortie des sondes et le débit du fluide caloporteur, on calcule d'après le débit et la différence entre ces deux températures la puissance thermique échangée avec le milieu géothermique, et on détermine d'après une modélisation préalable du milieu géothermique la variation correspondante de la température du milieu géothermique. Cette modélisation peut être réalisée par expérience et/ou de préférence d'après les résultats des tests précités. La température du milieu géothermique est donc évaluée par calcul plutôt que par mesure. Comme on l'a dit plus haut, la mesure directe est délicate, sauf pour vérifier à long terme l'absence de dérive importante, et corriger pour le futur le chronogramme de puissance échangée en cas de dérive.

Dans le cadre du stockage géothermique, le procédé comprend des phases de régénération au cours desquelles on injecte dans le milieu géothermique, via le fluide caloporteur et l'au moins une sonde, de l'énergie thermique, chaude ou froide, fournie par l'installation à partir d'une autre source reliée à l'installation. Par exemple un équipement d'aérothermie peut selon les conditions climatiques fournir de l'énergie thermique gratuite qui, notamment si elle n'a pas d'autre utilité dans l'installation, être captée et transférée au milieu géothermique. Autre exemple, si l'installation comprend des panneaux photovoltaïques, un surplus d'électricité photovoltaïque peut alimenter une pompe à chaleur aérothermique transférant de l'énergie thermique de l'atmosphère dans le milieu géothermique.

Dans une autre installation ou la même, le procédé peut comprendre, au titre du stockage géothermique, des phases de régénération au cours desquelles on injecte dans le milieu géothermique, via le fluide caloporteur et l'au moins une sonde, de la chaleur dite « fatale » fournie par un équipement de l'installation alimenté par une dite autre source. On appelle chaleur fatale la chaleur résiduelle d'un processus n'ayant pas pour objet principal de produire cette chaleur. C'est le cas notamment de la chaleur rejetée par un climatiseur ou plus généralement un appareil frigorifique. En utilisant le milieu géothermique comme source chaude de l'appareil, on régénère thermiquement le milieu géothermique en tant que future source chaude en même temps qu'on permet à l'appareil d'exercer sa fonction principale de refroidissement.

Suivant un autre aspect de l'invention, l'installation pour fournir de l'énergie thermique dans une structure consommatrice, l'installation comprenant :
- des équipements de collecte d'énergie qui sont en relation d'échange d'énergie avec des sources respectives, ces équipements comprenant au moins une sonde géothermique en relation d'échange thermique avec un milieu géothermique ;
- des équipements de transformations d'énergie alimentés au moins en partie par les équipements de collecte ;
- des équipements utilisateurs d'énergie, fournissant l'énergie à la structure ;
- un système de régulation capable de définir pour certains au moins des équipements différents états d'activation respectifs choisis en fonction de paramètres notamment climatiques, dans le sens d'une optimisation au regard d'au moins un critère pouvant être économique, environnemental, énergétique, lié au confort ou à la facilité de maintenance;
est caractérisée en ce que le système de régulation met en œuvre un procédé selon le premier aspect complété le cas échéant par tout ou partie de ses perfectionnements.

Suivant un troisième aspect de l'invention, le système pour la régulation d'une installation pour fournir de l'énergie thermique dans une structure consommatrice, l'installation comprenant :
- des équipements de collecte d'énergie qui sont en relation d'échange d'énergie avec des sources respectives, ces équipements comprenant au moins une sonde géothermique en relation d'échange thermique avec un milieu géothermique ;
- des équipements de transformation d'énergie alimentés au moins en partie par les équipements de collecte ;
- des équipements utilisateurs d'énergie, fournissant l'énergie à la structure ;

le système de régulation étant capable de définir, pour certains au moins des équipements, différents états d'activation respectifs choisis en fonction de paramètres notamment climatiques, dans le sens d'une optimisation au regard d'au moins un critère pouvant être économique, environnemental, énergétique, lié au confort ou à la facilité de maintenance;
est caractérisé en ce que le système de régulation met en œuvre un procédé selon le premier aspect complété le cas échéant par tout ou parte de ses perfectionnements, ou bien est intégré à une installation selon le deuxième aspect.

De préférence, le système de régulation du deuxième ou du troisième aspect comporte au moins une entrée capable de recevoir des prévisions portant sur une période postérieure à l'instant courant. Il peut notamment s'agir de prévisions météorologiques fournies sous forme exploitable par logiciel, et qui peuvent ainsi être prises en compte pour la mise à jour de la trajectoire prévisionnelle ou réelle de la température du milieu géothermique, ou dans le cas de la mise en œuvre d'un scénario comme exposé plus haut, pour la mise à jour du scénario d'une façon anticipative.

D'autres particularités et avantages de l'invention ressortiront encore de la description ci-après, relative à des exemples non-limitatifs.

### BREVE DESCRIPTION DES FIGURES

Aux dessins annexés :
- [Fig.1] La [Fig.1] est une représentation schématique d'une installation selon l'invention, dans un bâtiment ;
- [Fig.2] La [Fig.2] est un diagramme de température sur une année, montrant la trajectoire prévisionnelle de la température du milieu géothermique et le chronogramme de la puissance thermique échangée dans les sondes ;
- [Fig.3] La [Fig.3] illustre un épisode d'excursion au moyen d'un diagramme de température en fonction du temps, très schématique et avec distorsion d'échelle à des fins de visibilité ; et
- [Fig.4] La [Fig.4] est un diagramme en trois parties, de température en fonction du temps, correspondant à trois tranches successives d'une année, avec des épisodes d'excursion successifs.

La description qui suit s'entend comme décrivant toute particularité ou combinaison de particularités, dans les termes utilisés ci-après ou dans des termes plus généraux, dès lors que cette particularité ou combinaison de particularités est productrice d'effet ou avantage technique, même si la particularité ou combinaison de particularités ne constitue qu'une partie d'une phrase ou d'un paragraphe.

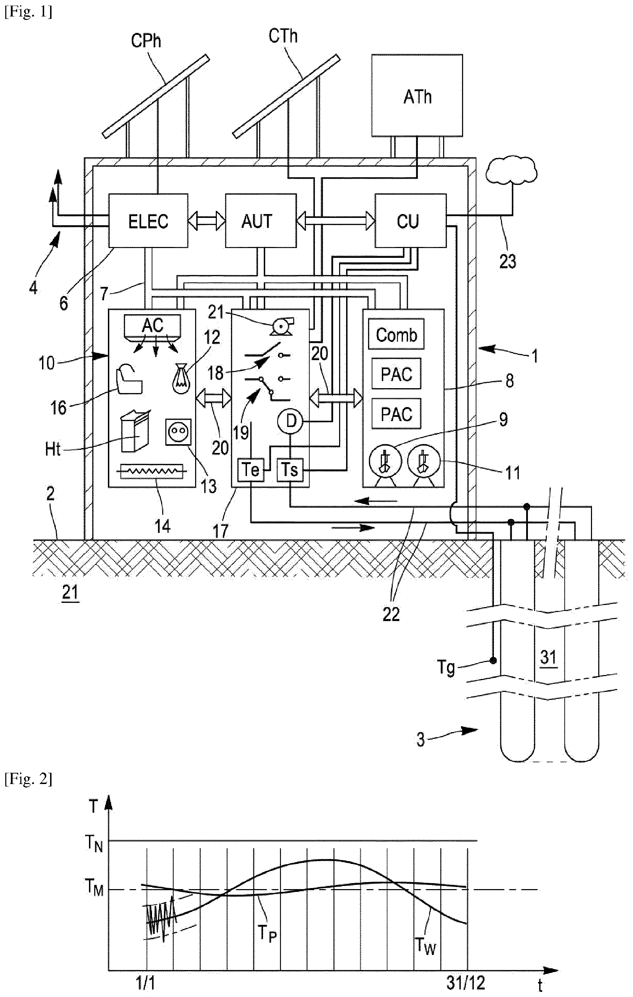

Dans l'exemple représenté à la [Fig.1], l'installation est associée à un bâtiment 1 implanté sur un terrain 2. L'installation comprend des équipements de collecte d'énergie comprenant ici au moins un capteur solaire photovoltaïque CPh, au moins un capteur solaire thermique CTh transformant le rayonnement solaire en chaleur absorbée par un liquide caloporteur parcourant le capteur, au moins un échangeur aérothermique Ath pouvant fonctionner en capteur thermique ou en dissipateur thermique pour un liquide caloporteur parcourant ledit capteur, par échange de calories entre le liquide et l'air extérieur, plusieurs sondes géothermiques 3 et au moins un raccordement à un réseau public de distribution d'électricité 4. Les sondes géothermiques 3 sont du type BTES enfoncées dans une zone du terrain 2 et du sous-sol correspondant qu'on appelle ici milieu géothermique 31 pour le distinguer du sol naturel 21 qui n'est pas influencé thermiquement par les sondes 3. Il peut également y avoir un réservoir de combustible ou un raccordement à un réseau de distribution de combustible, notamment de gaz (non représenté). Dans d'autres réalisations, certains types d'équipement de collecte tels que CPh, CTh et/ou Ath ne sont pas présents, l'invention pouvant être mise en œuvre dès lors que la géothermie n'est pas l'unique source thermique disponible pour produire du chaud ou du froid.

Un boîtier électrique 6 reçoit l'énergie électrique du réseau 4 et du capteur photovoltaïque Cph et fournit l'électricité de l'une et/ou l'autre de ces provenances sur une sortie de puissance 7. Dans certaines réalisations le boîtier 6 peut également injecter dans le réseau public 4 de l'électricité produite par le capteur photovoltaïque CPh.

En outre, l'installation comprend un ensemble 8 d'équipements de transformation et de stockage d'énergie thermique, à savoir, dans l'exemple, des pompes à chaleur PAC, une chaudière Comb pour des périodes exceptionnelles, ainsi qu'une citerne froide 9 et une citerne chaude 11 qui contiennent typiquement de l'eau additivée. Le parc de pompes à chaleur PAC permet de produire à volonté du froid et de la chaleur. La citerne froide 9 est destinée à accumuler du froid par congélation de tout ou partie de l'eau qu'elle contient, et à restituer ce froid par dégel total ou partiel de son contenu congelé. Chaque citerne 9, 11 contient un échangeur de chaleur pour échanger de la chaleur avec un fluide caloporteur pour recevoir ou fournir de l'énergie thermique en liaison avec les sources, par pompe à chaleur interposée, ou non.

Il y a également dans l'installation un ensemble 10 d'équipements d'utilisation qui sont en interface avec l'utilisateur pour sa consommation énergétique, à savoir par exemple des lampes 12 et des prises électriques 13, des modules de climatisation AC, des modules de chauffage Ht, des sols chauffants 14, des points de distribution d'eau chaude sanitaire 16 (un seul de chaque est représenté pour alléger la représentation).

L'installation comprend en outre un ensemble de raccordement sélectif 17, capable d'établir des raccordements appropriés entre les capteurs thermiques 3, ATh, CTh, les équipements 8 de stockage et transformation et les équipements d'utilisation 10. L'ensemble de raccordement 17 comprend typiquement des canalisations, des électrovannes simples 18, des électrovannes à voies multiples 19, et des pompes 21. L'ensemble 17 est raccordé aux sondes 3 par des tuyauteries 22 pour un liquide caloporteur, en général de l'eau additivée, circulant dans les sondes 3 où ce liquide caloporteur échange de la chaleur avec le milieu géothermique 31.

Il y a également dans l'installation de multiples capteurs de température, pression et débit ainsi que capteurs électriques tels qu'ampèremètres, et de multiples appareils de commande comme des thermostats ou interrupteurs, certains à la disposition des utilisateurs, d'autres à la disposition du personnel technique ou de gestion de l'immeuble. On a simplement représenté ici, à ce titre, un capteur de température Te pour le liquide caloporteur entrant dans les sondes 3, un capteur de température Ts pour le liquide caloporteur sortant des sondes 3, et un débitmètre D mesurant le débit de liquide caloporteur dans les sondes 3, ainsi qu'optionnellement un capteur Tg pour la température du milieu géothermique 31. On sait qu'au-delà d'une certaine profondeur où elle n'est plus influencée par la température de surface, la température du milieu géothermique croît avec la profondeur (gradient géothermal). La sonde Tg est placée à une profondeur choisie pour que la température locale y soit représentative d'une moyenne pour le milieu géothermique 31.

La représentation des ensembles 8, 10 et 17 sous forme de blocs à la [Fig.1] est conceptuelle, en pratique les différents équipements de chacun de ces ensembles peuvent être disséminés dans le bâtiment. C'est notamment, mais pas uniquement, le cas des équipements d'utilisation 10. Les doubles flèches horizontales 20 entre ces blocs symbolisent les liaisons fluidiques entre eux.

L'installation est configurable selon de nombreuses manières par un automate programmable AUT qui relie sélectivement entre eux les différents équipements en fonction de paramètres comprenant notamment le niveau de la demande pour chaque forme d'énergie (électricité, chauffage, rafraichissement, eau chaude sanitaire etc.) et la puissance disponible en provenance des équipements de captation locale (CPh, CTh, Ath, 3). En général, de multiples combinaisons d'états d'activation des différents équipements sont capables de satisfaire la demande. Une unité de commande CU exécute un programme d'optimisation qui émet des préconisations envoyées à l'automate AUT pour permettre à l'automate AUT de sélectionner et activer la combinaison optimale des états d'activation. Les préconisations sont des ordres de priorité entre équipements ayant des fonctions analogues, ou encore des recommandations pour des niveaux d'activation des équipements, ou encore des préconisations concernant les modes de fonctionnement pour les équipements ayant au moins deux modes de fonctionnement, comme par exemple les équipements pouvant intervenir dans la production de froid ou de chaleur (pompes à chaleur PAC si elles sont réversibles), les équipements pouvant céder ou acquérir de l'énergie (citernes 9, 11), les capteurs tels que les sondes 3 ou le capteur aérothermique Ath qui peuvent fonctionner en capteur de froid ou de chaleur, les modules de climatisation AC le cas échéant capables de fonctionner en chauffage ou en rafraichissement. L'automate et l'unité de commande pourraient être regroupées en un seul automate « intelligent ». La subdivision proposée ici est avantageuse pour être compatible avec une installation préexistante, équipée d'un automate AUT classique, que l'on a post-équipée selon l'invention en lui adjoignant notamment l'unité de commande CU et éventuellement certains des équipements de captation 3, CPh, CTh, ATh, de transformation et stockage 8, d'utilisation 10, et de raccordement 17.

Le bloc électrique 6 est relié à l'automate AUT qui le pilote. La sortie de puissance 7 alimente électriquement les trois ensembles 8, 10 et 17, ainsi que, de façon non représentée, l'automate AUT et l'unité de commande CU.

Les configurations possibles en service sont multiples. Certaines configurations privilégiées font intervenir le milieu géothermique 31 par l'intermédiaire des sondes 3. Par exemple :
- Le milieu géothermique 31 est la source froide d'au moins une pompe à chaleur PAC fournissant de la chaleur au plancher chauffant 14 ou au module de climatisation réversible AC, avec de l'énergie électrique fournie par le réseau 4 et/ou par les capteurs photovoltaïques CPh.
- Le milieu géothermique 31 est la source froide d'au moins une pompe à chaleur PAC fournissant de la chaleur à la citerne chaude 11, avec de l'énergie électrique en surplus fournie par les capteurs photovoltaïques CPh.
- Le milieu géothermique 31 est la source chaude d'au moins une pompe à chaleur PAC fournissant du froid au module de climatisation réversible AC, avec de l'énergie électrique fournie par le réseau 4 et/ou par les capteurs photovoltaïques CPh.

- Le milieu géothermique 31 est la source chaude d'au moins une pompe à chaleur PAC fournissant du froid à la citerne froide 9, avec de l'énergie électrique en surplus fournie par les capteurs photovoltaïques CPh.
- Le milieu géothermique 31 est réchauffé avec de la chaleur fournie par le capteur solaire thermique CTh ou le capteur aérothermique Ath, via une pompe à chaleur PAC ou directement.
- Le milieu géothermique 31 est refroidi par évacuation de chaleur dans l'atmosphère par le capteur aérothermique Ath, via une pompe à chaleur PAC ou directement.

Bien entendu, d'autres configurations non décrites ici, notamment ne faisant pas intervenir le milieu géothermique, sont rendues possibles par l'installation, par exemple la production de chaleur par des pompes à chaleur PAC utilisant comme source froide le capteur aérothermique Ath, ou par le capteur solaire thermique CTh via pompe à chaleur PAC ou non, la production de froid par pompe à chaleur PAC utilisant comme source chaude les capteurs solaire thermique CTh ou aérothermique Ath, un appoint de chauffage par la chaudière à combustion Comb ou par effet Joule etc. etc. Beaucoup de configurations peuvent coexister, par exemple un appoint de chauffage par combustion ou effet Joule pendant que le milieu géothermique trop sollicité est en train d'être rechargé en chaleur par l'une des configurations indiquées ci-dessus.

Suivant l'invention, la mise en œuvre des sondes géothermiques est maîtrisée sur une base de temps assez longue, typiquement annuelle, de façon à éviter la dérive en température du milieu géothermique au fil des années.

Pour cela, comme le montre la [Fig.2], on établit selon l'invention une trajectoire prévisionnelle TP de la température du milieu géothermique au cours d'une année. Le graphique de la [Fig.2] est gradué en abscisse du 1/1 (1^{er} Janvier) au 31/12 (31 Décembre). Dans cet exemple on pratique le stockage thermique saisonnier consistant en ce que le refroidissement du milieu géothermique dû au puisage de chaleur pendant la saison froide constitue en même temps un stockage de froid en vue de la saison chaude qui suivra. Inversement, le puisage de froid de la saison chaude réchauffe le milieu géothermique et constitue en même temps un stockage de chaleur pour la saison froide qui suivra. C'est pourquoi dans l'exemple représenté (typique de la zone tempérée de l'hémisphère Nord en termes de calendrier et de variations), la température prévisionnelle TP diminue en début d'année pendant la saison froide, puis remonte jusqu'à un maximum pendant la saison chaude avant de recommencer à baisser en début de saison froide suivante.

Malgré ces fluctuations, la température selon la trajectoire prévisionnelle TP est stable en moyenne pluriannuelle TM. Pour cela la puissance thermique échangée à travers les sondes 3 est ajustée en temps réel pour que la température réelle du milieu géothermique soit en général conforme à la trajectoire prévisionnelle TP. Pour cet ajustement, on pourrait envisager de réguler la puissance échangée d'après la température du milieu géothermique telle que mesurée par la sonde Tg. Mais cette méthode simple en elle-même dans son principe, se heurte à des difficultés pratiques car la mesure par la sonde Tg est trop peu précise pour les faibles écarts à détecter. C'est pourquoi on préfère se baser sur une modélisation du milieu géothermique, consistant en une valeur de sa capacité calorifique et une valeur de sa conductivité thermique. Pour ces deux paramètres on peut prendre soit des valeurs approximativement connues par expérience, soit des valeurs déterminées par des tests préalables effectués au moyen d'une sonde-test (non-représentée). Lors de ces tests on procède à des échanges thermiques avec le sol naturel par l'intermédiaire de la sonde-test et on en mesure les effets. Connaissant ces deux paramètres, on sait que l'énergie totale échangée dans un même sens (par exemple puisage de chaleur) sur une certaine durée, est égale à la variation du contenu thermique du milieu 31 sur cette durée, augmentée de l'apport thermique (en valeur algébrique) du sol naturel 21 sur ladite durée. Ledit apport thermique est prévisible d'après la conductivité thermique. La sonde Tg sert à vérifier la stabilité de la température du milieu géothermique à long terme, et donc à valider le modèle ou, en cas de dérive, à déclencher des préconisations correctives et/ ou une révision du modèle.

Le diagramme de la [Fig.2] montre également la courbe TW de la température du liquide caloporteur sortant des sondes. En partie gauche de la [Fig.2], on a représenté la valeur réelle avec des variations très rapides, telle que mesurée par la sonde Ts de la [Fig.1]. Ces variations sont dues par exemple à la mise en route d'une pompe à chaleur à certains moments de la journée et pas à d'autres. La courbe désignée par la référence TW correspond à un lissage de la température réelle. Quand TW<TP, le fluide caloporteur puise de la chaleur dans le milieu géothermique 31 ce qui fait donc baisser sa température TP. Inversement quand TW>TP, le fluide caloporteur injecte de la chaleur (puise du froid) dans le milieu géothermique 31, ce qui fait monter sa température TP.

La trajectoire TP est stable à long terme lorsque la différence entre l'énergie totale puisée sous forme de chaleur (en saison froide) et l'énergie totale injectée sous forme de chaleur (en saison chaude) est égale à l'énergie fournie sur la même période par le sol naturel 21 au milieu géothermique 31.

L'énergie échangée est l'intégrale de la puissance thermique échangée par rapport au temps. La puissance échangée est proportionnelle au débit du fluide caloporteur, mesuré par le capteur D, multiplié par la différence entre sa température d'entrée et sa température de sortie, telles que mesurées par les capteurs Te et Ts respectivement. Les capteurs D, Te et Ts permettent donc à l'unité de commande CU de calculer la puissance échangée puis, par une intégration dans le temps, l'énergie échangée.

En fonction de paramètres liés au bâtiment, à son site d'implantation, à son équipement et à sa destination, on détermine si l'intérêt est de puiser plus de froid ou plus de chaleur du milieu géothermique, en fonction de critères qui peuvent être économiques, environnementaux, liés au confort ou à la facilité de maintenance ou etc. Selon une particularité importante de l'invention, on fait en sorte que le flux thermique entre le sol naturel 21 et le milieu géothermique 31 soit orienté dans le même sens que le flux thermique que l'on choisit de privilégier. Dans l'exemple représenté à la [Fig.2] , qui correspond typiquement à celui d'un immeuble d'habitation en zone tempérée, on souhaite privilégier le puisage de chaleur. Autrement dit on souhaite puiser plus de chaleur que de froid dans le milieu géothermique 31. Pour cela on a choisi la trajectoire TP de façon que sa température moyenne pluriannuelle TM soit inférieure à la température TN du sol naturel 21. Ainsi, l'énergie totale pouvant être puisée sous forme de chaleur est égale à la somme de l'énergie injectée sous forme de chaleur par les sondes 3 pendant la saison chaude et de l'énergie apportée par le flux permanent entre le sol naturel 21 et le milieu géothermique 31.

Il y a, en général, entre l'énergie calorifique et l'énergie frigorifique qui seraient susceptibles d'être puisées dans le milieu géothermique 31 un déséquilibre qui aboutirait à une dérive de la moyenne pluriannuelle TM. Pour définir une trajectoire prévisionnelle TP qui évite cet écueil sans faire appel à un différentiel de température excessif entre TM et TN (différentiel qui finirait par nuire au rendement de captation), l'invention propose par exemple de se baser sur un puisage maximal de celle des deux énergies dont la quantité requise est la plus faible (dans l'exemple de la [Fig.2] le froid), et de limiter le puisage de l'autre forme d'énergie de façon que le bilan énergétique de l'ensemble soit dans un équilibre caractérisé par une stabilité de la moyenne pluriannuelle TM.

Concrètement, dans l'installation de la [Fig.1], l'automate AUT pilote les états d'activation instantanés des équipements, en particulier ceux coopérant avec les sondes 3, en fonction de la demande provenant des utilisateurs, du personnel technique ou de certains automatismes comme des thermostats ou des commutateurs horaires. Ce pilotage instantané est à l'origine des variations très rapides de la température TW illustrées dans la partie gauche de la [Fig.2]. Cependant grâce aux capteurs D, Te, Ts, l'unité de commande CU évalue la puissance thermique échangée et surveille dans quelle mesure celle-ci correspond au respect de la trajectoire prévisionnelle TP de la température du milieu géothermique.

Typiquement, l'unité de commande CU calcule le bilan énergétique (différence entre l'énergie calorifique et l'énergie frigorifique) des échanges avec le milieu géothermique et détermine si ce bilan satisfait au respect de la température moyenne TM. En cas de dérive, l'unité de commande CU corrige ses préconisations usuelles et/ou émet des préconisations correctives.

Si les mesures par la sonde Tg ou une dérive de la différence entre les températures d'entrée et sortie de l'eau pour un débit donné laissent penser que la température moyenne du milieu géothermique dérive alors que le bilan énergétique des échanges est normal, une procédure de révision du modèle peut être initiée.

On a jusqu'ici décrit le stockage géothermique comme alimenté par l'énergie fatale de processus dont l'utilité principale est autre. Par exemple, le stockage de froid résulte du puisage de chaleur, et le stockage de chaleur résulte du puisage de froid. L'invention n'est pas limitée à cela, elle envisage aussi des épisodes de régénération du milieu géothermique, au cours desquels un équipement est activé dans le seul but, ou dans le principal but, d'injecter de l'énergie thermique dans le milieu géothermique 31. Par exemple, en cas de surplus d'électricité disponible de la part du capteur photovoltaïque CPh, cette électricité peut alimenter une pompe à chaleur PAC qui injecte du chaud ou du froid dans le milieu géothermique 31. En cas de surplus d'énergie thermique disponible de la part de l'un et/ou l'autre des capteurs CTh et Ath, ladite énergie peut être conduite dans le milieu géothermique.

Dans une version préférée de l'invention, la trajectoire prévisionnelle de la température TP du milieu géothermique fait partie d'un scénario prévisionnel du fonctionnement de l'installation sur, typiquement, une année. Le scénario est basé d'une part sur la STD (Simulation Thermique Dynamique) du bâtiment qui anticipe les consommations à chaque instant en fonction de différents paramètres relatifs au bâtiment, à son site d'implantation, et à son utilisation prévue et d'autre part sur les équipements du bâtiment en matière d'énergie thermique. Le scénario prévoit sur une cadence très rapide, typiquement tous les quarts d'heure, la combinaison optimale des états d'activation qui satisfera les besoins du bâtiment. Cette optimisation ne doit pas s'entendre pour l'instant considéré, mais aussi avec prise en compte du futur. Par exemple on pourra renoncer à faire appel au milieu géothermique même si cela serait le plus avantageux à l'instant considéré, si on préfère économiser cette énergie pour une utilisation future encore plus avantageuse. La trajectoire prévisionnelle TP de la température du milieu géothermique s'inscrit dans cette logique puisque, comme on l'a vu plus haut, on renonce par exemple à utiliser de la chaleur géothermique au-delà de ce qu'on pourra injecter comme froid plus tard de façon à rester conforme à la trajectoire et à la température moyenne TM.

Dans une version encore plus préférée, la conception de l'installation passe par une étape d'optimisation de la panoplie d'équipements. Pour cela on part d'un catalogue d'équipements, on recherche par exploration systématique informatisée les combinaisons qui sont susceptibles de satisfaire la STD avec un coefficient de sécurité suffisant mais pas excessif, on recherche pour chacune d'elles le scénario le plus avantageux en fonction de critères (économique, environnemental etc), puis on arrête le choix sur l'installation offrant le compromis jugé le plus favorable entre un scénario avantageux au regard des critères et une installation elle-même avantageuse au regard de critères (coût d'investissement, durée de vie des équipements, encombrement etc.) L'installation ayant été ainsi définie avec son scénario, ledit scénario prescrit notamment la puissance thermique échangée, quart d'heure par quart d'heure, dans les sondes. En service, le scénario est prolongé de façon glissante pour que la prévision porte en permanence sur une année complète à partir de l'instant courant.

A chaque instant, les valeurs des paramètres peuvent différer de celles sur lesquelles sont établis le scénario et notamment la trajectoire prévisionnelle TP. Ceci peut concerner aussi bien les valeurs courantes que les valeurs prévisionnelles. Par exemple, la température atmosphérique peut être très différente de celle prévue dans le scénario pour l'instant courant, ou encore les prévisions météorologiques annoncent une période atypique, par exemple de grand froid ou au contraire de canicule. Des évènements comme une épidémie peuvent considérablement affecter l'occupation de locaux d'habitation ou professionnels. Ainsi, dans les jours qui précèdent un instant donné, il peut s'avérer que le scénario n'est plus optimal. La même chose peut être vraie si les valeurs relatives à la période passée récente ont différé de celles prises en compte pour le scénario. Si par exemple un hiver a été particulièrement doux, le milieu géothermique a été moins refroidi que prévu et il est probablement possible de puiser plus de chaleur que prévu en fin de saison froide sans trop risquer une incapacité de consommer ce froid en saison chaude. Enfin, la demande des utilisateurs sera généralement, à chaque instant, différente de celle anticipée par le scénario.

Pour pouvoir tenir compte des prévisions météorologiques de façon automatique, l'unité de commande CU comporte une liaison 23 ([Fig.1]), par exemple par Internet, pour recevoir des informations météorologiques informatisées, qui sont prises en compte pour ces mises à jour.

Une version préférée de l'invention prévoit ainsi que la trajectoire prévisionnelle TP ne soit qu'une sorte de repère dont la température réelle du milieu géothermique peut s'écarter en fonction des données les plus récentes relatives aux valeurs actuelles ou futures des paramètres pris en compte.

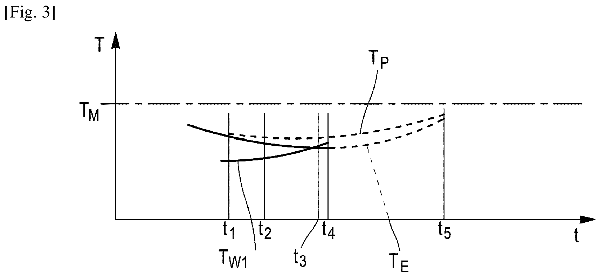

Lorsque des variations conjoncturelles affectent les paramètres (par rapport au scénario), donc en principe temporaires, la température du milieu géothermique initie un épisode d'excursion illustré de manière très schématique à la [Fig.3] où les échelles sont déformées. Pour une certaine durée, une trajectoire d'excursion TE remplace la trajectoire TP qui subsiste mais n'est plus appliquée. La trajectoire d'excursion TE s'écarte temporairement de la trajectoire TP et rejoint la trajectoire TP au bout d'un certain temps. A la [Fig.3], la trajectoire d'excursion TE a commencé à l'instant t1, l'instant t2 est celui où la courbe de température de l'eau aurait dû croiser la trajectoire TP, mais en fait la courbe réelle TW1 croise la trajectoire d'excursion TE plus tard, en t3. Jusqu'à l'instant t4, qui dans cette représentation est l'instant courant, la trajectoire d'excursion TE est divergente par rapport à la trajectoire TP, puis de l'instant t4 la trajectoire TE est orientée pour rattraper progressivement la trajectoire TP à l'instant futur t5.

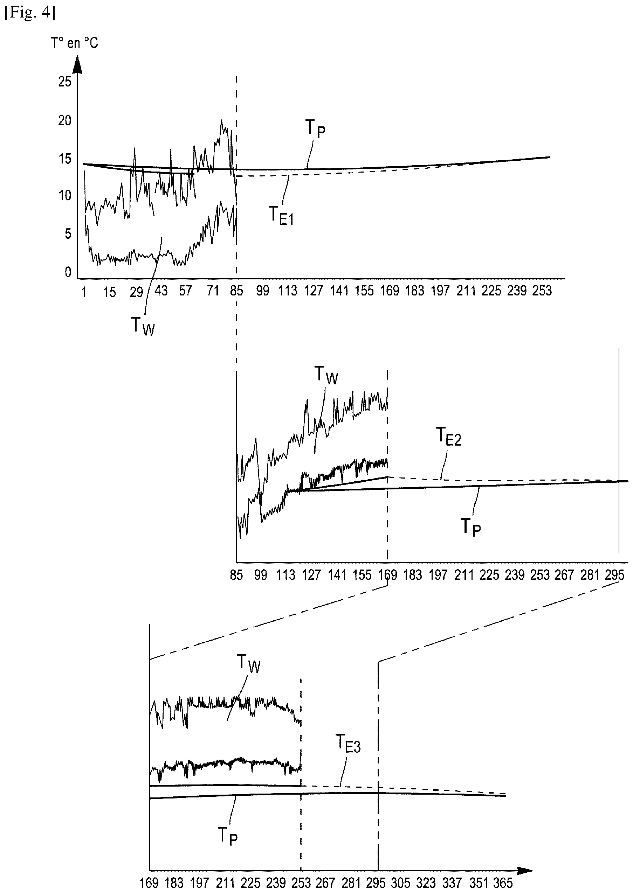

Dans la pratique, la réalité corrobore rarement les prévisions détaillées du scénario et les épisodes d'excursion peuvent se télescoper. Un exemple en est donné [Fig.4] montrant trois tranches successives d'une même année, montrées séparément pour permettre de mieux voir, pour chaque tranche, ce qu'était la trajectoire d'excursion prévue pour le futur de l'excursion.

Dans la première tranche qui va du jour 1 au jour courant 85, une période exceptionnellement froide au printemps a conduit à refroidir plus que prévu le milieu géothermique. Une trajectoire d'excursion TE1 a été suivie, prévue pour se terminer au jour 239. Mais ensuite le printemps a été très chaud et bien avant la fin de la première excursion une deuxième trajectoire d'excursion TE2 est intervenue comme le montre le diagramme du milieu de la [Fig.4] qui va du jour 85 au jour courant 169. Elle prévoit un rattrapage assez rapide de la trajectoire TP au jour 295, pour garder des réserves de froid pour le reste de la saison chaude. Mais finalement, en prévision d'un hiver froid (diagramme du bas de la [Fig.4], du jour 169 au jour courant 253) l'épisode d'excursion TE2 a fait place, avant d'être fini, à un épisode selon la trajectoire d'excursion TE3 qui se prolonge au-dessus de la trajectoire prévisionnelle TP jusqu'au-delà du jour 365.

Ces épisodes d'excursion peuvent être gérés par l'unité de commande CU selon l'une ou l'autre des deux versions du procédé, exposées plus haut, à savoir soit par une définition précise de chaque épisode à partir de l'unité de commande CU, soit de préférence sous une surveillance à moyen-long terme du respect de la température moyenne TM. Même dans cette seconde version, l'unité de commande CU peut cependant influer sur un épisode d'excursion, et par exemple lancer des préconisations correctives si elle anticipe une conséquence néfaste de l'excursion ou au contraire des préconisations amplificatrices si elle anticipe des conséquences favorables.

De façon non illustrée, l'unité de commande CU peut également modifier définitivement la trajectoire de température TP dans différents cas : constat que la consommation énergétique réelle du bâtiment diffère de celle prise en compte pour la trajectoire en vigueur, modification des équipements, transformation du bâtiment, importante dérive en température du milieu géothermique etc.

Bien entendu, l'invention n'est pas limitée aux exemples décrits et représentés. Au lieu de surveiller la stabilité en température du milieu géothermique 31 par une sonde telle que Tg, on peut le faire en analysant la variation de température du liquide caloporteur ayant traversé les sondes. Par exemple si on injecte du liquide froid et qu'il se réchauffe moins qu'attendu on peut en déduire que le milieu géothermique 31 s'est refroidi.

## Revendications

1. Procédé pour piloter une installation associée à une structure consommatrice d'énergie (1), cette installation comprenant au moins une source d'énergie géothermique avec laquelle on pratique du stockage thermique, au moins une autre source d'énergie (4, CPh, CTh, Ath), des équipements de transformation et de distribution d'énergie dans la structure, et un système de régulation (AUT, CU), la source géothermique comprenant des sondes d'échange thermique (3) installées dans un milieu géothermique (31) et adaptées à permettre un échange de chaleur entre le milieu géothermique et un fluide caloporteur parcourant les sondes, le procédé comprenant :
■ la définition d'une trajectoire prévisionnelle (TP) de la température du milieu géothermique dans le temps ;
■ l'évaluation d'au moins sensiblement en temps réel la température du milieu géothermique et/ou la puissance thermique échangée avec le milieu géothermique ;
■ l'opération d'un ajustement de la puissance thermique échangée entre le fluide caloporteur et le milieu géothermique (31) dans le sens d'une conformité au moins approximative de la température du milieu géothermique (31) avec la trajectoire prévisionnelle (TP), dans lequel la trajectoire prévisionnelle (TP) présente en moyenne annuelle (TM) un différentiel de température avec la température (TN) du sol naturel (21),
**caractérisé en ce que**, dans le cas d'une installation où la géothermie fournit en moyenne annuelle, à la structure (1), plus de puissance de chauffage que de puissance de froid, la trajectoire prévisionnelle (TP) est choisie pour être, en moyenne annuelle (TM), inférieure à la température (TN) du sol naturel (21) ; et **en ce que**, dans le cas d'une installation où la géothermie fournit en moyenne annuelle, à la structure (1), plus de puissance de froid que de puissance de chauffage, la trajectoire prévisionnelle (TP) est choisie pour être, en moyenne annuelle (TM), supérieure à la température (TN) du sol naturel (21).

2. Procédé selon la revendication 1, **caractérisé en ce que** la trajectoire (TP) présente pour toute la durée pour laquelle elle est établie une différence dans un même sens avec la température (TN) du sol naturel (21).

3. Procédé selon l'une des revendications 1 ou 2, **caractérisé en ce qu'**en régime stabilisé au-delà d'une période transitoire, la trajectoire prévisionnelle (TP) est fluctuante dans le temps, de part et d'autre d'une valeur moyenne (TM) sensiblement stable.

4. Procédé selon l'une des revendications 1 à 3, **caractérisé en ce que** la trajectoire prévisionnelle (TP) est définie pour des instants successifs dans le sens d'une optimisation globale pour chaque instant considéré et son futur, de manière à préserver la stabilité thermique du milieu géothermique.

5. Procédé selon l'une des revendications 1 à 4, **caractérisé en ce qu'**à un instant d'intervention la trajectoire prévisionnelle (TP) est modifiable pour le temps suivant l'intervention.

6. Procédé selon l'une des revendications 1 à 4, **caractérisé en ce qu'**à un instant d'intervention de la régulation après la mise en route de l'installation, le procédé comprend :
■ la modification de la trajectoire dans des cas où des valeurs d'au moins un paramètre choisi dans la liste comprenant les paramètres relatifs à l'installation, à son site d'implantation, à son utilisation prévue, à ses équipements en matière d'énergie thermique, s'écartent de leur estimation prise en compte pour définir la trajectoire prévisionnelle en vigueur jusqu'au moment de l'intervention.

7. Procédé selon la revendication 6, **caractérisé en ce que** les valeurs qui s'écartent de leur estimation comprennent des valeurs prévisionnelles portant sur des instants postérieurs à l'instant d'intervention.

8. Procédé selon l'une des revendications 6 à 7, **caractérisé en ce qu'**il comprend :
■ la mise à jour d'au moins une des estimations d'après une tendance longue constatée ou anticipée pour l'un au moins des paramètres, différente de l'estimation précédente prise en compte pour la définition de la trajectoire prévisionnelle en vigueur ;
■ le remplacement définitivement de la trajectoire prévisionnelle par une nouvelle trajectoire prévisionnelle prenant en compte l'au moins une estimation mise à jour.

9. Procédé selon l'une des revendications 1 à 8, **caractérisé en ce qu'**il comprend, au cours d'un épisode d'excursion (TE, TE1 TE2, TE3), laisser la température du milieu géothermique s'écarter de la trajectoire prévisionnelle (TP) dans une situation exceptionnelle concernant l'un au moins des paramètres choisis dans la liste comprenant les paramètres relatifs à l'installation, à son site d'implantation, à son utilisation prévue, à ses équipements en matière d'énergie thermique, ou une combinaison de plusieurs des paramètres.

10. Procédé selon la revendication 9, **caractérisé en ce qu'**il comprend :
■ la définition au début de l'épisode de la puissance thermique échangée dans l'au moins une sonde de façon que la température du milieu géothermique (31) s'écarte de la trajectoire prévisionnelle (TP), et
■ la définition pour la température du milieu géothermique d'une trajectoire d'excursion temporairement écartée de la trajectoire prévisionnelle.

11. Procédé selon la revendication 9, **caractérisé en ce qu'**il comprend :
■ Le pilotage de la puissance thermique échangée en fonction de la demande réelle avec un degré de liberté à l'égard de la trajectoire prévisionnelle (TP).

12. Procédé selon la revendication 9 ou 11, **caractérisé en ce qu'**il comprend :
■ le fait de se munir d'un chronogramme prévisionnel de la puissance thermique échangée avec le milieu géothermique ;
■ la surveillance de la conformité au moins approximative de la température moyenne évaluée du milieu géothermique (31) avec une moyenne (TM) de la trajectoire prévisionnelle (TP) ;
■ en cas de dérive de la température moyenne évaluée, la modification au moins indirectement de la puissance thermique échangée avec le milieu géothermique, par rapport au chronogramme prévisionnel, dans un sens tendant au retour à la conformité avec l'une de la température moyenne (TM) et de la trajectoire prévisionnelle (TP).

13. Procédé selon l'une des revendications 1 à 12, **caractérisé en ce qu'**en fonction de paramètres relatifs au climat, aux sources et aux besoins énergétiques de l'installation, le système de régulation (AUT, CU) commande une activation sélective des sources et des équipements de l'installation, ainsi que des raccordements sélectifs entre sources et équipements, et opère un réglage de puissance des équipements, dans le sens d'une satisfaction des besoins et d'une optimisation au regard d'au moins un critère pouvant être économique, environnemental, énergétique, lié au confort ou à la facilité de maintenance, ledit réglage de puissance comprenant ledit ajustement de la puissance thermique échangée entre le fluide caloporteur et le milieu géothermique (31) dans l'au moins une sonde (3).

14. Procédé selon la revendication 13, **caractérisé en ce que** le système de régulation définit une succession dans le temps de combinaisons d'états d'activation de certains au moins des équipements et des sources sur une durée postérieure à l'instant courant, dans un sens d'une optimisation incluant le temps à venir, au regard de l'au moins un critère.

15. Procédé selon la revendication 13 ou 14, **caractérisé en ce que** le procédé comprend la prise en compte de prévisions pour au moins un paramètre choisi parmi : au moins un prix de l'énergie en provenance d'une source, et au moins un paramètre climatique parmi la température extérieure, l'ensoleillement et la vitesse du vent.

16. Procédé selon l'une des revendications 1 à 15, **caractérisé en ce qu'**avant la mise en service de l'installation on procède à des tests de réponse thermique du milieu géothermique (31) à des échanges thermiques au moyen d'une sonde-test, de façon à déterminer la conductivité thermique et la capacité calorifique du milieu géothermique (31).

17. Procédé selon l'une des revendications 1 à 16, **caractérisé en ce qu'**on mesure la température du fluide caloporteur à l'entrée et à la sortie des sondes et le débit du fluide caloporteur, on calcule d'après le débit et la différence entre ces deux températures la puissance thermique échangée avec le milieu géothermique, et on détermine d'après une modélisation préalable du milieu géothermique la variation correspondante de la température du milieu géothermique.

18. Procédé selon l'une des revendications 1 à 17, **caractérisé par** des phases de régénération au cours desquelles on injecte dans le milieu géothermique, via le fluide caloporteur et les sondes, de l'énergie thermique, chaude ou froide, fournie par l'installation à partir d'une autre source reliée à l'installation.

19. Procédé selon l'une des revendications 1 à 18, **caractérisé par** des phases de régénération au cours desquelles on injecte dans le milieu géothermique, via le fluide caloporteur et les sondes, de l'énergie thermique fatale fournie par un équipement de l'installation alimenté par une dite autre source.

20. Installation pour fournir de l'énergie thermique dans une structure consommatrice (1), l'installation comprenant :
■ des équipements de collecte d'énergie (3, 4, CPh, CTh, Ath) qui sont en relation d'échange d'énergie avec des sources respectives, ces équipements comprenant au moins une sonde géothermique (3) en relation d'échange thermique avec un milieu géothermique (31) ;
■ des équipements de transformations d'énergie (PAC, Comb, ELEC) alimentés au moins en partie par les équipements de collecte ;
■ des équipements (10) utilisateurs d'énergie, fournissant l'énergie à la structure ;
■ un système de régulation (AUT, CU) capable de définir pour certains au moins des équipements différents états d'activation respectifs choisis en fonction de paramètres notamment climatiques, dans le sens d'une optimisation au regard d'au moins un critère pouvant être économique, environnemental, énergétique, lié au confort ou à la facilité de maintenance;
**caractérisée en ce que** le système de régulation met en œuvre un procédé selon l'une des revendications 1 à 19.

21. Système pour la régulation d'une installation pour fournir de l'énergie thermique dans une structure consommatrice (1), l'installation comprenant :
■ des équipements de collecte d'énergie (3, 4, CPh, CTh, Ath) qui sont en relation d'échange d'énergie avec des sources respectives, ces équipements comprenant au moins une sonde géothermique (3) en relation d'échange thermique avec un milieu géothermique (31) ;
■ des équipements de transformation d'énergie (PAC, Comb, ELEC) alimentés au moins en partie par les équipements de collecte ;
■ des équipements utilisateurs d'énergie (10), fournissant l'énergie à la structure (2) ;
le système de régulation étant capable de définir, pour certains au moins des équipements, différents états d'activation respectifs choisis en fonction de paramètres notamment climatiques, dans le sens d'une optimisation au regard d'au moins un critère pouvant être économique, environnemental, énergétique, lié au confort ou à la facilité de maintenance;
**caractérisé en ce que** le système de régulation met en œuvre un procédé selon l'une des revendications 1 à 19 ou bien est intégré à une installation selon la revendication 20.

22. Installation selon la revendication 20 ou système selon la revendication 21, caractérisé(e) en ce que le système de régulation (AUT, CU) comporte au moins une entrée (23) capable de recevoir des prévisions portant sur une période postérieure à l'instant courant.

## Patentansprüche

1. Verfahren zum Steuern einer mit einer Energie verbrauchenden Struktur (1) verbundenen Anlage, wobei die Anlage eine geothermische Energiequelle, mit welcher eine Wärmespeicherung durchgeführt wird, mindestens eine weitere Energiequelle (4, CPh, CTh, Ath), Vorrichtungen zum Umwandeln und Verteilen von Energie in der Struktur, und ein Regelsystem (AUT, CU) aufweist, wobei die geothermische Quelle Wärmetausch-Sonden (3) aufweist, welche in einem geothermischen Milieu (31) angeordnet sind und geeignet sind, einen Wärmetausch zwischen dem geothermischen Milieu und einer durch die Sonden fließenden Wärmeübertragungsflüssigkeit zu ermöglichen, wobei das Verfahren die folgenden Schritte aufweist:
■ Definieren eines prognostizierten zeitlichen Verlaufs (TP) der Temperatur des geothermischen Milieus;
■ im Wesentlichen in Echtzeit erfolgendes Ermitteln der Temperatur des geothermischen Milieus und/oder der mit dem geothermischen Milieu ausgetauschten Wärmeleistung;
■ Anpassen der zwischen der Wärmeübertragungsflüssigkeit und dem geothermischen Milieu (31) ausgetauschten Wärmeleistung in Richtung einer zumindest annähernden Übereinstimmung zwischen der Temperatur des geothermischen Milieus (31) mit dem prognostizierten Verlauf (TP), wobei der prognostizierte Verlauf (TP) im jährlichen Mittel (TM) einen Temperaturunterschied zu der Temperatur (TN) des natürlichen Bodens (21) aufweist,
**dadurch gekennzeichnet, dass** im Falle einer Anlage, bei welcher die Geothermie im Jahresmittel der Struktur (1) mehr Heizleistung als Kühlleistung liefert, der prognostizierte Verlauf (TP) so gewählt wird, dass er im Jahresmittel (TM) unter der Temperatur (TN) des natürlichen Bodens (21) liegt; und dass im Falle einer Anlage, bei welcher die Geothermie im Jahresmittel der Struktur (1) mehr Kühlleistung als Heizleistung liefert, der prognostizierte Verlauf (TP) so gewählt wird, dass er im Jahresmittel (TM) über der Temperatur (TN) des natürlichen Bodens (21) liegt.

2. Verfahren nach Anspruch 1, **dadurch gekennzeichnet, dass** der Verlauf (TP) über die gesamte Dauer, für welche er erstellt wurde, eine gleichsinnige Differenz zur Temperatur (TN) des natürlichen Bodens (21) aufweist.

3. Verfahren nach Anspruch 1 oder 2, **dadurch gekennzeichnet, dass** in einem über eine Übergangszeit hinaus stabilisierten Modus der prognostizierte Verlauf (TP) über die Zeit auf beide Seiten eines im Wesentlichen stabilen Mittelwerts (TM) schwankt.

4. Verfahren nach einem der Ansprüche 1 bis 3, **dadurch gekennzeichnet, dass** der prognostizierte Verlauf (TP) für aufeinanderfolgende Zeitpunkte im Sinne einer globalen Optimierung für jeden betrachteten Zeitpunkt und dessen Zukunft derart definiert wird, dass die thermische Stabilität des geothermischen Milieus gewahrt bleibt.

5. Verfahren nach einem der Ansprüche 1 bis 4, **dadurch gekennzeichnet, dass** der prognostizierte Verlauf (TP) zu einem Eingreifzeitpunkt für die Zeit nach dem Eingriff modifizierbar ist.

6. Verfahren nach einem der Ansprüche 1 bis 4, **dadurch gekennzeichnet, dass** das Verfahren zu einem Eingreifzeitpunkt der Regelung nach der Inbetriebnahme der Anlage den folgenden Schritt aufweist:
■ Modifizieren des Verlaufs, wenn Werte mindestens eines Parameters, welcher aus der Liste von Parametern betreffend die Anlage, deren Standort, deren vorgesehenen Zweck, deren Vorrichtungen in Bezug auf Wärmeenergie, gewählt ist, von ihrer Schätzung abweichen, die bei der Definition des bis zum Eingreifzeitpunkt geltenden prognostizierten Verlaufs berücksichtigt wurde.

7. Verfahren nach Anspruch 6, **dadurch gekennzeichnet, dass** die von ihrer Schätzung abweichenden Werte prognostizierte Werte aufweisen, welche sich auf Zeitpunkte nach dem Eingreifzeitpunkt beziehen.

8. Verfahren nach einem der Ansprüche 6 bis 7, **dadurch gekennzeichnet, dass** es die folgenden Schritte aufweist:
■ Aktualisieren mindestens einer Schätzung gemäß einer für mindestens einen der Parameter festgestellten oder erwarteten Tendenz, welche von der für die Definition des geltenden prognostizierten Verlaufs verwendeten vorhergehenden Schätzung verschieden ist;
■ endgültiges Ersetzen des prognostizierten Verlaufs durch einen neuen prognostizierten Verlaufs unter Berücksichtigung der mindestens einen aktualisierten Schätzung.

9. Verfahren nach einem der Ansprüche 1 bis 8, **dadurch gekennzeichnet, dass** es den Schritt aufweist, während einer Abweichungsperiode (TE, TE1, TE2, TE3) das Abweichen der Temperatur des geothermischen Milieus von dem prognostizierten Verlauf (TP) in einer Ausnahmesituation zuzulassen, welche den mindestens einen aus der Liste von Parametern betreffend die Anlage, deren Standort, deren vorgesehenen Zweck, deren Vorrichtungen in Bezug auf Wärmeenergie, gewählten Parameter oder eine Kombination von mehreren Parametern betrifft.

10. Verfahren nach Anspruch 9, **dadurch gekennzeichnet, dass** es die folgenden Schritte aufweist:
■ Definieren, zu Beginn der Periode, der in der mindestens einen Sonde ausgetauschten Wärmeleistung derart, dass die Temperatur des geothermischen Milieus (31) von dem prognostizierten Verlauf (TP) abweicht, und
■ Definieren eines Abweichungsverlaufs für die Temperatur des geothermischen Milieus, der vorübergehend von dem prognostizierten Verlauf abweicht.

11. Verfahren nach Anspruch 9, **dadurch gekennzeichnet, dass** es den folgenden Schritt aufweist:
■ Regeln der ausgetauschten Wärmeleistung in Abhängigkeit von dem realen Bedarf mit einem Freiheitsgrad in Bezug auf den prognostizierten Verlauf (TP).

12. Verfahren nach Anspruch 9 oder 11, **dadurch gekennzeichnet, dass** es die folgenden Schritte aufweist:
■ Erstellen eines prognostizierten Zeitdiagramms der mit dem geothermischen Milieu ausgetauschten Wärmeleistung;
■ Überwachen der zumindest annähernden Übereinstimmung der geschätzten Durchschnittstemperatur des geothermischen Milieus (31) mit einem Mittelwert (TM) des prognostizierten Verlaufs (TP);
■ im Fall einer Abweichung der geschätzten Durchschnittstemperatur, zumindest indirektes Modifizieren der mit dem geothermischen Milieu ausgetauschten Wärmeleistung in Bezug auf das prognostizierte Zeitdiagramm in eine Richtung, welche zu einer Rückkehr zur Übereinstimmung mit der Durchschnittstemperatur (TM) und/oder dem prognostizierten Verlauf (TP) tendiert.

13. Verfahren nach einem der Ansprüche 1 bis 12, **dadurch gekennzeichnet, dass** das Regelsystem (AUT, CU) in Abhängigkeit von das Klima, die Quellen und den Energiebedarf der Anlage betreffenden Parametern eine selektive Aktivierung der Quellen und der Vorrichtungen der Anlage sowie selektive Verbindungen der Quellen und der Vorrichtungen der Anlage steuert, und eine Leistungseinstellung der Vorrichtungen im Sinne einer Bedarfserfüllung und einer Optimierung hinsichtlich mindestens eines Kriteriums durchführt, welches ein wirtschaftliches, umweltbezogenes, energetisches, den Komfort oder die Einfachheit der Wartung betreffendes Kriterium sein kann, wobei die Leistungseinstellung die Anpassung der zwischen der Wärmeübertragungsflüssigkeit und dem geothermischen Milieu (31) in der mindestens einen Sonde (3) ausgetauschten Wärmeleistung umfasst.

14. Verfahren nach Anspruch 13, **dadurch gekennzeichnet, dass** das Regelsystem eine zeitliche Abfolge von Kombinationen von Aktivierungszuständen zumindest bestimmter Vorrichtungen und Quellen über einen Zeitraum nach dem aktuellen Zeitpunkt im Sinne einer die Zukunft einbeziehenden Optimierung im Hinblick auf das mindestens eine Kriterium definiert.

15. Verfahren nach Anspruch 13 oder 14, **dadurch gekennzeichnet, dass** das Verfahren das Berücksichtigen von Prognosen für mindestens einen Parameter aufweist, welcher gewählt ist aus: mindestens einem Preis der Energie aus einer Quelle, und mindestens einem Klimaparameter aus der Außentemperatur, der Sonnenscheindauer und der Windgeschwindigkeit.

16. Verfahren nach einem der Ansprüche 1 bis 15, **dadurch gekennzeichnet, dass** vor der Inbetriebnahme der Anlage Tests zur thermischen Reaktionstest des geothermischen Milieus (31) auf Wärmeaustausche mittels einer Testsonde durchgeführt werden, um die Wärmeleitfähigkeit und die Wärmekapazität des geothermischen Milieus (31) zu ermitteln.

17. Verfahren nach einem der Ansprüche 1 bis 16, **dadurch gekennzeichnet, dass** die Temperatur der Wärmeübertragungsflüssigkeit am Einlass und am Auslass der Sonden und den Volumenstrom der Wärmeübertragungsflüssigkeit gemessen wird, anhand des Volumenstroms und der Differenz zwischen den beiden Temperaturen die mit dem geothermischen Milieu ausgetauschte Wärmeleistung berechnet wird, und anhand einer vorab erfolgten Modellierung des geothermischen Milieus die entsprechende Schwankung der Temperatur des geothermischen Milieus ermittelt wird.

18. Verfahren nach einem der Ansprüche 1 bis 17, **gekennzeichnet durch** Regenerationsphasen, in deren Verlauf über die Wärmeübertragungsflüssigkeit und die Sonden warme oder kalte Wärmeenergie, welche von der Installation aus einer anderen, mit der Anlage verbundenen Quelle geliefert wird, in das geothermische Milieu eingespeist wird.

19. Verfahren nach einem der Ansprüche 1 bis 18, **gekennzeichnet durch** Regenerationsphasen, in deren Verlauf über die Wärmeübertragungsflüssigkeit und die Sonden ungenutzte Wärmeenergie, welche von einer durch eine andere Quelle gespeisten Vorrichtung der Anlage geliefert wird, in das geothermische Milieu eingespeist wird.

20. Anlage zum Liefern von Wärmeenergie in eine verbrauchende Struktur (1), wobei die Anlage aufweist:
■ Energiesammelvorrichtungen (3, 4, CPh, CTh, Ath), die in Energieaustauschbeziehung mit den jeweiligen Quellen stehen, wobei diese Vorrichtungen mindestens eine geothermische Sonde (3) in Wärmetauschbeziehung mit einem geothermischen Milieu (31) aufweisen;
■ Energieumwandlungsvorrichtungen (PAC, Comb, ELEC), welche zumindest zum Teil von den Sammelvorrichtungen gespeist werden;
■ Energie verbrauchende Vorrichtungen (10), welche der Struktur Energie liefern;
■ ein Regelsystem (AUT, CU), das geeignet ist, zumindest für einige der Vorrichtungen jeweilige verschiedene Aktivierungszustände, welche in Abhängigkeit von insbesondere Klimaparametern gewählt sind, im Sinne einer Optimierung mindestens eines Kriteriums zu definieren, welches ein wirtschaftliches, umweltbezogenes, energetisches, den Komfort oder die Einfachheit der Wartung betreffendes Kriterium sein kann;
**dadurch gekennzeichnet, dass** das Regelsystem ein Verfahren nach einem der Ansprüche 1 bis 19 implementiert.

21. System zur Regelung einer Anlage zum Liefern von Wärmeenergie in eine verbrauchende Struktur (1), wobei die Anlage aufweist:
■ Energiesammelvorrichtungen (3, 4, CPh, CTh, Ath), die in Energieaustauschbeziehung mit den jeweiligen Quellen stehen, wobei diese Vorrichtungen mindestens eine geothermische Sonde (3) in Wärmetauschbeziehung mit einem geothermischen Milieu (31) aufweisen;
■ Energieumwandlungsvorrichtungen (PAC, Comb, ELEC), welche zumindest zum Teil von den Sammelvorrichtungen gespeist werden;
■ Energie verbrauchende Vorrichtungen (10), welche der Struktur Energie liefern;
wobei das Regelsystem geeignet ist, zumindest für einige der Vorrichtungen jeweilige verschiedene Aktivierungszustände, welche in Abhängigkeit von insbesondere Klimaparametern gewählt sind, im Sinne einer Optimierung mindestens eines Kriteriums zu definieren, welches ein wirtschaftliches, umweltbezogenes, energetisches, den Komfort oder die Einfachheit der Wartung betreffendes Kriterium sein kann;
**dadurch gekennzeichnet, dass** das Regelsystem ein Verfahren nach einem der Ansprüche 1 bis 19 implementiert beziehungsweise in eine Anlage nach Anspruch 20 integriert ist.

22. Anlage nach Anspruch 20 oder System nach Anspruch 21, **dadurch gekennzeichnet, dass** das Regelsystem (AUT, CU) mindestens einen Eingang (23) aufweist, welcher geeignet ist, einen Zeitraum nach dem aktuellen Zeitpunkt betreffende Prognosen zu empfangen.

## Claims

1. Method for controlling an installation associated with an energy-consuming structure (1), this installation comprising at least one source of geothermal energy with which thermal storage is carried out, at least one other source of energy (4, CPh, CTh, ATh), items of equipment for transforming and distributing energy in the structure, and a regulating system (AUT, CU), the geothermal source comprising thermal exchange probes (3) installed in a geothermal medium (31) and adapted to allow heat exchange between the geothermal medium and a heat transfer fluid passing through the probes, the method comprising:
• defining a forecast trajectory (TP) of the temperature of the geothermal medium over time;
• evaluating at least substantially in real time the temperature of the geothermal medium and/or the thermal power exchanged with the geothermal medium;
• making an adjustment of the thermal power exchanged between the heat transfer fluid and the geothermal medium (31) in the direction of at least approximate conformity of the temperature of the geothermal medium (31) with the forecast trajectory (TP), wherein the forecast trajectory (TP) has, as an annual mean (TM), a temperature differential with the temperature (TN) of the natural ground (21).
**Characterized in that**:
- in the case of an installation where, as an annual mean, geothermal energy supplies the structure (1) with more heating power than cooling power, the trajectory is chosen to be, as an annual mean (TM), below the temperature (TN) of the natural ground (21),
- in the case of an installation where, as an annual mean, geothermal energy supplies the structure (1) with more cooling power than heating power, the trajectory is chosen to be, as an annual mean (TM), above the temperature (TN) of the natural ground (21).

2. Method according to claim 1, **characterized in that** the trajectory (TP) has, over the whole duration for which it is established, a difference in one and the same direction with the temperature (TN) of the natural ground (21).

3. Method according to one of claims 1 to 2, **characterized in that**, in a steady state condition after a transitory period, the forecast trajectory (TP) fluctuates over time, either side of a substantially stable mean value (TM).

4. Method according to one of claims 1 to 3, **characterized in that** the forecast trajectory (TP) is defined for successive instants in the direction of an overall optimization for each instant in question and its future, to ensure the thermal stability of the geothermal medium.

5. Method according to one of claims 1 to 4, **characterized in that** at an instant of intervention the forecast trajectory (TP) can be amended for the time following the intervention.

6. Method according to one of claims 1 to 4, **characterized in that** at an instant of intervention of the regulation after startup of the installation, the method comprises:
• amending the trajectory in cases where values of at least one parameter, chosen from a list of parameters relating to the installation, its location, its intended use and its thermal energy equipment, diverge from the estimate thereof taken into account to define the forecast trajectory in force up to the moment of the intervention.

7. Method according to claim 6, **characterized in that** the values that diverge from the estimate thereof comprise forecast values relating to instants subsequent to the instant of intervention.

8. Method according to one of claims 6 to 7, **characterized in that** it comprises:
• updating at least one of the estimates according to a long-term trend observed or anticipated for at least one of the parameters, different from the preceding estimate taken into account for defining the forecast trajectory in force;
• definitively replacing the forecast trajectory with a new forecast trajectory taking into account the at least one updated estimate.

9. Method according to one of claims 1 to 8, **characterized in that** it comprises, during an episode of deviation (TE, TE1, TE2, TE3), allowing the temperature of the geothermal medium to diverge from the forecast trajectory (TP) in an exceptional situation relating to at least one of the parameters, chosen from a list of parameters relating to the installation, its location, its intended use and its thermal energy equipment, or a combination of several of the parameters.

10. Method according to claim 9, **characterized in that** it comprises:
• defining at the start of the episode the thermal power exchanged in the at least one probe so that the temperature of the geothermal medium (31) diverges from the forecast trajectory (TP), and
• defining for the temperature of the geothermal medium a deviation trajectory temporarily divergent from the forecast trajectory.

11. Method according to claim 9, **characterized in that** it comprises:
• controlling the thermal power exchanged as a function of the actual demand with a degree of freedom with respect to the forecast trajectory (TP).

12. Method according to claim 9 or 11, **characterized in that** it comprises:
• acquiring a forecast timing chart of the thermal power exchanged with the geothermal medium;
• monitoring the at least approximate conformity of the evaluated mean temperature of the geothermal medium (31) with a mean (TM) of the forecast trajectory (TP);
• in the case of drift of the evaluated mean temperature, amending at least indirectly the thermal power exchanged with the geothermal medium, with respect to the forecast timing chart, in a direction tending towards the return to conformity with one out of the mean temperature (TM) and the forecast trajectory (TP).

13. Method according to one of claims 1 to 12, **characterized in that**, as a function of parameters relating to the climate, to the sources and to the energy requirements of the installation, the regulating system (AUT, CU) commands a selective activation of the sources and of the items of equipment of the installation, as well as selective connections between sources and items of equipment, and carries out power regulation of the items of equipment, in the direction of satisfying the requirements and an optimization with respect to at least one criterion, that may be economic, environmental, associated with comfort or ease of maintenance, said power regulation comprising said adjustment of the thermal power exchanged between the heat transfer fluid and the geothermal medium (31) in the at least one probe (3).

14. Method according to claim 13, **characterized in that** the regulating system defines a succession over time of combinations of activation states of at least some of the items of equipment and of the sources over a duration subsequent to the current instant, in a direction of an optimization including the future, with respect to the at least one criterion.

15. Method according to claim 13 or 14, **characterized in that** the method comprises taking into account forecasts for at least one parameter chosen from: at least one price for energy originating from a source, and at least one climatic parameter out of the exterior temperature, sunshine and wind speed.

16. Method according to one of claims 1 to 15, **characterized in that**, before commissioning of the installation, tests of the thermal response of the geothermal medium (31) to thermal exchanges are conducted by means of a test probe, so as to determine the thermal conductivity and the heating capacity of the geothermal medium (31).

17. Method according to one of claims 1 to 16, **characterized in that** the temperature of the heat transfer fluid at the inlet and at the outlet of the probes and the flow rate of the heat transfer fluid are measured, the flow rate and the difference between these two temperatures are used to calculate the thermal power exchanged with the geothermal medium, and the corresponding variation in the temperature of the geothermal medium is determined according to a prior modelling of the geothermal medium.

18. Method according to one of claims 1 to 17, **characterized by** regeneration phases during which thermal energy, hot or cold, supplied by the installation from another source connected to the installation is injected into the geothermal medium by means of the heat transfer fluid and the probes.

19. Method according to one of claims 1 to 18, **characterized by** regeneration phases during which unavoidable thermal energy, supplied by an item of equipment of the installation fed by one said other source is injected into the geothermal medium by means of the heat transfer fluid and the probes.

20. Installation for supplying thermal energy to a consuming structure (1), the installation comprising:
• items of equipment for collecting energy (3, 4, CPh, CTh, ATh) that are in an energy exchange relationship with respective sources, these items of equipment comprising at least one geothermal probe (3) in a thermal exchange relationship with a geothermal medium (31);
• items of equipment for transforming energy (PAC, Comb, ELEC) at least partially fed by the items of collection equipment;
• items of equipment (10) that are users of energy, supplying energy to the structure;
• a regulating system (AUT, CU) capable of defining, for at least some of the different items of equipment, respective activation states chosen as a function of parameters, in particular climatic parameters, in the direction of an optimization with respect to at least one criterion that may be economic, environmental, associated with comfort or ease of maintenance;
**characterized in that** the regulating system implements a method according to one of claims 1 to 19.

21. System for regulating an installation for supplying thermal energy to a consuming structure (1), the installation comprising:
• items of equipment for collecting energy (3, 4, CPh, CTh, ATh) that are in an energy exchange relationship with respective sources, these items of equipment comprising at least one geothermal probe (3) in a thermal exchange relationship with a geothermal medium (31);
• items of equipment for transforming energy (PAC, Comb, ELEC) at least partially fed by the items of collection equipment;
• items of equipment that are users of energy (10), supplying energy to the structure (2);
the regulating system being capable of defining, for at least some of the items of equipment, different respective activation states chosen as a function of parameters, in particular climatic parameters, in the direction of an optimization with respect to at least one criterion that may be economic, environmental, associated with comfort or ease of maintenance;
**characterized in that** the regulating system implements a method according to one of claims 1 to 19 or is integrated in an installation according to claim 20.

22. Installation according to claim 20, or system according to claim 21, **characterized in that** the regulating system (AUT, CU) comprises at least one input (23) capable of receiving forecasts concerning a period subsequent to the current instant.
